Europäisches Patentamt

(19) European Patent Office

Office européen des brevets

(11) **EP 0 757 971 A1**

## (12) EUROPEAN PATENT APPLICATION
published in accordance with Art. 158(3) EPC

(43) Date of publication:
12.02.1997 Bulletin 1997/07

(21) Application number: 95907013.7

(22) Date of filing: 31.01.1995

(51) Int. Cl.$^6$: **C01F 11/46**, D21H 17/67

(86) International application number:
PCT/ES95/00014

(87) International publication number:
WO 96/23729 (08.08.1996 Gazette 1996/36)

(84) Designated Contracting States:
BE DE FR GB IT NL

(71) Applicant: Compania General Yesera, S.A.
17850 Besalu (ES)

(72) Inventors:
• PRUJA AGUSTI, Silvia
17850 Besalu (ES)

• SANCEZ ABEYA, Manuel
17850 Besalu (ES)

(74) Representative: Ungria Lopez, Javier et al
Avda. Ramon y Cajal, 78
28043 Madrid (ES)

(54) **PROCESS FOR OBTAINING A CHARGE OF DIHYDRATE CALCIUM SULFATE IN THE FORM OF ACICULAR CRYSTALS AND UTILIZATION IN THE PAPER MAKING INDUSTRY**

(57)    The process of the invention comprises a phase of treating by precipitation residues originating from processes for obtaining titanium bioxide which contains sulphuric acid, iron oxide and titanium bioxide, by adding calcium carbonate at a pH lower than 2.5. The resulting product is a white crystalline product which has essentially the shape of acicular white cristals of carbonate of calcium dihydrate and titanium bioxide which is used as a charge material in the fabrication of paper. The titanium bioxide contained is comprised between 0.1 and 10 % with respecto to the sulfate of calcium dihydrate.

## Description

The present invention refers to a process by which a mineral product is obtained as well as to the use of said product as a filler in paper manufacturing processes. The product is essentially comprised of calcium sulfate dihydrate and titanium bioxide the latter being present in proportions of 0.1 to 10% with reference to the calcium sulfate dihydrate and gives excellent qualities of whiteness and opacity to the paper that is obtained by adding the product. The discharge product of the process is a residue coming from the manufacture of titanium bioxide.

It is known that titanium bioxide is conventionally obtained from ilmenites. Ilmenites are a mineral product of natural origin in the form of black sand or rock and the theoretical formula $FeTiO_3$ is generally used for the characterization thereof. The titanium bioxide content in ilmenites varies depending on the origin generally being from 45 to 60% though in some cases; enrichened ilmenites coming from processes to obtain iron are also used.

The conventional processes to obtain titanium bioxide from ilmenites comprises treating mineral ilmenites with concentrated sulfuric acid to hydrolyze the titanium and the iron present, reduction of the iron to its ferrous form, precipitation of the titanium hydrate thus obtained, filtration, drying and roasting of the precipitate. The product thus obtained serves as a discharge product for the preparation of different titanium bioxide commercial products.

The diluted sulfuric acid coming from the initial treatment of ilmenites is discarded and neutralized by adding lime carbonates, and dumped in a controlled manner in the form of red slude. Said sludge contain calcium sulfate, red iron and titanium bioxide residues that, due to their composition, color and concentration, were conventionally only used as soil structuring agents, aside from constituting sources of environmental pollution, and economic losses resulting from the dumping costs and from the fact that a substantial part of the titanium bioxide contained in the ilmenites could not be used as a useful product.

The manufacture of titanium bioxide described above, basically implies the following chemical reactions:

$$FeTiO_3 + 2H_2O \rightarrow TiOSO_4 + FeSO_4 + 2H_2O$$

$$TiSO_4 \rightarrow TiO_2.nH_2O + H_2SO_4$$

$$H_2SO_4 + Fe + TiO_2.nH_2O + CO_3Ca \rightarrow SO_4Ca.H_2O \downarrow + TiO_2 + CO_2 \uparrow + FeO$$

The last phase of the reaction produces colored calcium sulfate due to the presence of substantial amounts of iron.

On the other hand, in the paper industry, mineral fillers such as kaolins, talc, lime carbonates and sulfates have been traditionally used to achieve special characteristics in the paper and to replace part of the cellulose pulp. Said fillers are added in the paper manufacturing process in the form of aqueous dispersions prepared "in situ" by means of adding said fillers as powder or in the form of highly concentrated aqueous dispersions supplied by specialized manufacturers. One of the conventional fillers is calcium sulfate dihydrate obtained from calcium sulfate hemihydrate. French patent FR-A-1005978 describes a process of this type that comprises a first phase of roasting calcium sulfate of natural origin (gypsum) to obtain dehydrated calcium sulfate, in other words hemihydrate or anhydrate III, a second phase in which the dehydrated calcium sulfate is dispersed under agitation to obtain an aqueous dispersion of calcium sulfate dihydrate in the form of acicular crystals, and a third optional phase of removal of the water to obtain a colloidal mass of said calcium sulfate dihydrate crystals.

The main disadvantage of the processes to obtain calcium sulfate dihydrate of the type that are described in French patent FR-A-1005978 is that they must start with natural gypsum whose obtainment in quarries implies a substantial impact on the environment, aside from the processes of dehydration, rehydration under agitation and optional recrystallization which imply substantial energy expenditure.

It is also known that the use of calcium sulfate as a filler in paper manufacturing allows a high degree of replacement of cellulose without the paper lossing specific desired characteristics such as breaking strength, bursting strength, rigidity etc., but use thereof as the content and whiteness thereof increase, slight losses in the opacity of the paper are also produced. On the other hand, titanium bioxide has been used conventionally as a flatting agent in many fields of industry and especially in the paper industry. However, the cost of titanium bioxide has increased considerably hence inclusion thereof in fillers to produce paper with a high degree of opacity turns out to be costly.

The present invention, just as it is claimed is conceived to overcome the above mentioned disadvantages, in other words, has the purpose of advantageously making use of the residues coming from the conventional processes to obtain titanium bioxide via sulfate, as well as the purpose of avoiding the economic and environmental disadvantages that the preparation of fillers of calcium sulfate dihydrate from calcium sulfate of natural origin implies.

Hence, the present invention consists of a combination of a process of scrubbing the red sludge resulting from the manufacture of titanium bioxide and the use of the refined product obtained from the treatment of said sludge as a filler in the paper industry.

In accordance with the above, the last reaction phase in the processes to obtain titanium bioxide from ilmenites, in other words, the phase

$$H_2SO_4 + FeO + TiO_2.nH_2O + CO_3Ca \rightarrow SO_4Ca.H_2O\downarrow + TiO_2 + CO_2\downarrow + FeO$$

produces colored calcium sulfates due to the presence of substantial amounts of iron.

In accordance with the present invention, the scrubbing process is carried out by means of the reaction at a pH between 0.5 and 2.5. It thus results that the main precipitate that is obtained is a very white mixture that contains calcium sulfate and titanium bioxide. The precipitate is later washed, and filtered until a cake with a degree of humidity between 20 and 30%.

So that the calcuium sulfate present in said cake acquires a crystalline structure of individual acicular crystals or of macles with a particle size between 5 and 30 micra, in other words, so that it serves as a filler in the manufacture of paper either directly in the wet powder form or after redispersion in water, the above cited precipitation must comprise at least the following conditions:

- high shear agitation in a reactor;
- control of the reaction rate by means of selection of calcium carbonate with a granulometry between 10 and 50 micra, the prior dilution of calcium carbonate in a proportion of 15 to 57% solids, as well as the time that same remains in the reactor;
- selection of a top quality calcium carbonate that has a degree of purity between 80 and 99%;
- concentration of the sulfuric acid/titanium Dioxide mixture between 15 and 40%;
- adjust the pH to a value below 2.5 to avoid the precipitation of FeO in the presence of

$$TiO_2 \rightarrow FeO;$$

- to avoid pH values higher than 2.5 since such higher values precipitate the rest of the calcium sulfate and FeO.

The final product thus obtained, which comprises 0.1 to 10% of titanium bioxide withr egard to calcium sulfate, does not require roasting or rehydration under agitation to result in a product in which the calcium sulfate has the form of individual acicular crystals of calcium sulfate highly suitable as a filler in the manufacture of paper. Besides, the process allows one to make use of a large part of the residue coming from the obtainment of the manufacture of titanium bioxide and to retrieve a substantial amount of titanium bioxide from said residues to include the titanium bioxide as an advantageous compoment in said filler.

## Claims

1. Process to obtain a mineral filler that contains calcium sulfate dihydrate and titanium bioxide, characterized in that it substantially comprises a precipitation treatment with the following steps:

   - selecting a calcium carbonate with a degree of purity between 80 and 99% and a granulometry between 10 and 50 micra;
   - diluting the calcium carbonate to a proportion between 15 and 57% solids;
   - adding the calcium carbonate in dilution, to residues coming from processes to obtain titanium bioxide that contain sulfuric acid, iron oxide and titanium oxide;
   - adjusting the concentration of the mixture of sulfuric acid/$TiO_2$ to a value between 15 and 40%;
   - adjusting the pH of the mixture coming from the previous steps to a value between 0.5 and 2.5;
   - carrying out the mxing of the components of the above mentioned steps under high shear agitation conditions;
   - until achieving a precipitated product that contains white calcium sulfate dihydrate in the form of acicular crystals with a particle size between 5 and 30 micra; and titanium bioxide in a proportion between 0.1 and 10% with regard to the calcium sulfate; and
   - separating said precipitated product from the reaction mass.

2. Process according to claim 1, characterized in that the precipitated product is separated from the reaction mass by decanting, washing and filtering of the separated precipitate, to obtain a cake with a humidity content between 10 and 30%.

3. Use of the precipitated product obtained according to one of the claims 1 and 2, characterized in that said product is used as a mineral filler in the manufacture of paper.

4. Use according to claim 3, characterized in that the product is used in the form of a wet powder.

5. Use according to claim 3, characterized in that the product is used in the form of an aqueous dispersion.

EP 0 757 971 A1

## INTERNATIONAL SEARCH REPORT

International Application No. PCT/ES 95/00014

**A. CLASSIFICATION OF SUBJECT MATTER**
IPC 6   C01F11/46   D21H17/67

According to International Patent Classification (IPC) or to both national classification and IPC

**B. FIELDS SEARCHED**

Minimum documentation searched (classification system followed by classification symbols)
IPC 6   C01F   D21H

Documentation searched other than minimum documentation to the extent that such documents are included in the fields searched

Electronic data base consulted during the international search (name of data base and, where practical, search terms used)

**C. DOCUMENTS CONSIDERED TO BE RELEVANT**

| Category* | Citation of document, with indication, where appropriate, of the relevant passages | Relevant to claim No. |
|---|---|---|
| X | EP,A,0 577 272 (TIOXIDE GROUP) 5 January 1994<br>see the whole document<br>--- | 1-5 |
| X | FR,A,2 318 826 (TIOXIDE GROUP) 18 February 1977<br>see page 1, line 6 - line 13; claims 1-3<br>--- | 1-5 |
| A | FR,A,2 403 298 (TIOXIDE GROUP) 13 April 1979<br>see the whole document<br>--- | 1-5 |
| A | US,A,5 298 169 (LAFERRIERE ET AL.) 29 March 1994<br>see column 2, line 19 - line 27<br>---<br>-/-- | 1-5 |

[X] Further documents are listed in the continuation of box C.       [X] Patent family members are listed in annex.

* Special categories of cited documents :

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art.

"&" document member of the same patent family

| Date of the actual completion of the international search | Date of mailing of the international search report |
|---|---|
| 26 September 1995 | 20.10.95 |

| Name and mailing address of the ISA | Authorized officer |
|---|---|
| European Patent Office, P.B. 5818 Patentlaan 2<br>NL - 2280 HV Rijswijk<br>Tel. (+31-70) 340-2040, Tx. 31 651 epo nl,<br>Fax (+31-70) 340-3016 | ZALM, W |

Form PCT/ISA/210 (second sheet) (July 1992)

4

INTERNATIONAL SEARCH REPORT

International Application No.
PCT/ES 95/00014

C.(Continuation) DOCUMENTS CONSIDERED TO BE RELEVANT

| Category * | Citation of document, with indication, where appropriate, of the relevant passages | Relevant to claim No. |
|---|---|---|
| A | DATABASE WPI<br>Section Ch, Week 7115,<br>Derwent Publications Ltd., London, GB;<br>Class E31, AN 25991S<br>URAL FORESTRY TECHNOLOGIC 'Processing of<br>spent acid solutions containing iron.'<br>& SU,A,258 289 (URAL FORESTRY TECHNOLOGIC)<br>11 June 1968<br>see abstract<br>----- | 1,2 |

Form PCT/ISA/210 (continuation of second sheet) (July 1992)